(19) Europäisches Patentamt
European Patent Office
Office européen des brevets

(11) Veröffentlichungsnummer: **0 134 471**
**B1**

(12) # EUROPÄISCHE PATENTSCHRIFT

(45) Veröffentlichungstag der Patentschrift: **13.05.87**

(51) Int. Cl.⁴: **C 09 B 29/01**, C 09 B 31/02, C 09 B 31/16, C 09 K 19/60

(21) Anmeldenummer: **84107753.0**

(22) Anmeldetag: **04.07.84**

(54) **Azofarbstoffe und flüssigkristalline Materialien enthaltend diese Farbstoffe.**

(30) Priorität: **07.07.83 DE 3324420**

(43) Veröffentlichungstag der Anmeldung: **20.03.85 Patentblatt 85/12**

(45) Bekanntmachung des Hinweises auf die Patenterteilung: ***13.05.87 Patentblatt 87/20***

(84) Benannte Vertragsstaaten: **CH DE FR GB IT LI**

(56) Entgegenhaltungen:
**FR - A - 1 486 826**
**FR - A - 2 487 833**
**US - A - 3 084 151**

(73) Patentinhaber: **BASF Aktiengesellschaft, Carl-Bosch-Strasse 38, D-6700 Ludwigshafen (DE)**

(72) Erfinder: **Etzbach, Karl-Heinz, Dr., Bensheimer Ring 9a, D-6710 Frankenthal (DE)**
Erfinder: **Neumann, Peter, Dr., Franz-Schubert-Strasse 1, D-6908 Wiesloch (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 134 471 B1

**Beschreibung**

Die Erfindung betrifft Verbindungen der allgemeinen Formel I

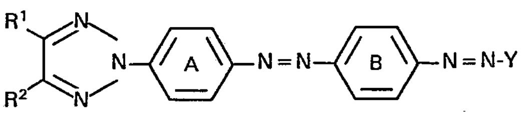 I

in der

$R^1$ und $R^2$ Wasserstoff, gegebenenfalls substituiertes Alkyl, Cycloalkyl, Aralkyl, Aryl, Acyl, Alkoxy- oder Aroxycarbonyl oder zusammen Alkylen oder ein gegebenenfalls substituierter Benzring und

Y ein Rest der Formel

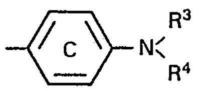 , 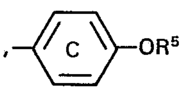 , 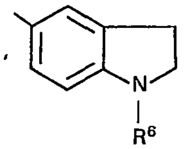 ,

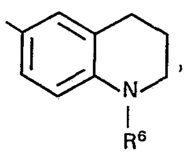 , 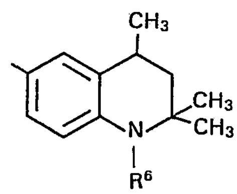 ,

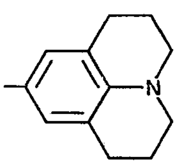 oder 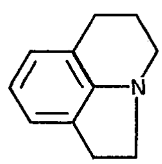

sind, wobei die Ringe A, B und C noch substituiert und durch einen Benzring anelliert sein können und wobei

$R^3$ und $R^4$ Wasserstoff oder gegebenenfalls substituiertes Alkyl, Aralkyl oder Cycloalkyl oder zusammen mit dem Stickstoff Piperidino, Pyrrolidino oder Morpholino,

$R^5$ Wasserstoff, gegebenenfalls substituiertes Alkyl, Cycloalkyl, Aralkyl, Aryl, Acyl, Alkoxy- oder Aroxycarbonyl oder Alkyl- oder Arylsulfonyl und

$R^6$ Wasserstoff, Alkyl oder Cyclohexyl sind.

Der Ring A kann beispielsweise noch durch Chlor, Brom, Cyan, Methyl , Ethyl, Methoxy, Ethoxy oder Hydroxy substituiert sein.

Für den Ring B kommen als Substituenten z.B. Chlor, Brom, Methyl, Ethyl, Methoxy, Ethoxy, Acetylamino, Propionylamino oder ein anellierter Benzring in Betracht.

Der Ring C kann als Substituenten z. B. Chlor, Brom, Methyl, Ethyl, Methoxy, Ethoxy, Acetylamino, Propionylamino oder einen anellierten Benzring tragen.

Reste $R^1$ und $R^2$ sind neben Wasserstoff z.B. $C_1$- bis $C_4$-Alkyl, Cycloalkyl, Cyclopentyl, Benzyl, 2-Phenylethyl, 4-Methylbenzyl, Phenyl, durch Methyl, Ethyl, Propyl oder Butyl substituiertes Phenyl, Acetyl, Benzoyl, $C_1$- bis $C_{12}$-Alkoxycarbonyl oder Phenoxycarbonyl, $R^1$ und $R^2$ zusammen sind z.B. Tri- oder Tetramethylen oder

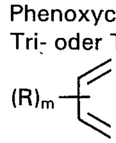 , wobei

R Wasserstoff, $C_1$- bis $C_{12}$ -Alkyl, Cyclopentyl, -hexyl oder heptyl, Nitro, Cyan, Chlor, Brom, Hydroxy, $C_1$- bis $C_{12}$-Alkoxy, Benzyloxy, Amino, $C_1$- bis $C_4$-Dialkylamino oder $C_1$- bis $C_{12}$-Alkoxycarbonyl und m 1 oder 2 sind.

Einzelne Reste R sind neben den bereits genannten z.B.: Methyl, Ethyl, Propyl, Butyl, Nonyl, Methoxy, Ethoxy, Butoxy, Dimethylamino, Diethylamino, Dibutylamino, Methoxycarbonyl, Ethoxycarbonyl oder Butoxycarbonyl.

Reste $R^3$ und $R^4$ sind neben Wasserstoff z.B.: Methyl, Ethyl, Butyl, Pentyl, Hexyl, Octyl, Cyclohexyl, 2-Phenylethyl, 2-Cyanethyl, 2-Oxethyl, 2-Acetoxethyl, Allyl, benzyl, 4-Butylbenzyl.

Für $R^5$ sind im einzelnen beispielsweise zu nennen: Wasserstoff, Methyl, Ethyl, Propyl, Butyl, Hexyl, Heptyl, Nonyl, Cyclohexyl, Benzyl, 4-Cyclohexylbenzyl, 4-(4'-Butylcyclohexyl)-benzyl, 4-Butylbenzyl, Phenyl, 4-Butylphenyl, Acetyl, Propionyl, Butyryl, Benzoyl, 4-Cyclohexylbenzoyl, 4-(4'-Butylcyclohexyl)-benzoyl, 4-Butylbenzoyl, Ethoxycarbonyl, Phenoxycarbonyl, Butylsulfonyl, Phenylsulfonyl, 4-Methylphenylsulfonyl.

Alkylreste $R^6$ sind z.B.: Wasserstoff, Methyl, Ethyl, Butyl, Cyclohexyl.

Die Verbindungen der Formel I eignen sich besonders als pleochroitische Farbstoffe in elektrooptischen Flüssigkristallanzeigen vom Guest-Host-Typ.

Flüssigkristalline Materialien, welche pleochroitische Farbstoffe enthalten, finden Verwendung in Displays. Die Grundlagen der erfindungsgemässen Verwendung sind bekannt und z.B. in H. Kelker u. R. Hatz, Handbook of Liquid Crystals S. 611 ff (1980), R. J. Cox, Mol. Cryst. Liq. Cryst. Vol. 55, S. 51 ff (1979), L. Pauls u. G. Schwarz, Elektronik 14, S. 66 ff (1982) beschrieben. Weitere Literatur, welche die erfindungsgemässe Verwendung detailliert beschreibt, finden sich in den genannten Veröffentlichungen.

Farbstoffe für Flüssigkristallmischungen müssen mehrere Anforderungen erfüllen. Siehe z.B. J. Constant et. al., J. Phys. D: Appl. Phys. Vol. 11, S. 479 ff (1978), F. Jones u. T. J. Reeve, Mol. Cryst. Liq. Cryst. Vol. 60, S. 99 ff (1980), EP 43 904, EP 55 838, EP 65 869. Sie dürfen im elektrischen Feld nicht ionisieren, müssen einen möglichst hohen molaren Extinktionskoeffizienten ε uns eine gute Löslichkeit in der verwendeten Flüssigkristallmatrix besitzen, müssen chemisch und insbesondere photochemisch stabil sein und zur Erzielung eines guten Kontrastes des «Guest-Host»-Displays einen Ordnungsgrad S möglichst grösser 0,75 in der jeweiligen nematischen Phase aufweisen.

Farbstoffe, die diesen Anforderungen gerecht werden, finden sich überwiegend in der Klasse der Antrachinone. Siehe z.B. EP 56 492, EP 44 893, EP 59 036, EP 54 217.

Azofarbstoffe haben bisher vor allem den Nachteil, dass entweder die Löslichkeit oder die Lichtstabilität ungenügend ist.

Überraschenderweise haben die erfindungsgemässen Farbstoffe bei gutem Ordnungsgrad auch hohe Löslichkeiten und gute Lichtstabilitäten in der jeweiligen Flüssigkristallmatrix.

Die Herstellung der entsprechenden 2-(4'-Aminophenyl)-triazole ist bekannt z.B. Kupplung von p-Nitroanilin auf Acetessigester (C. Kjellin, Chem. Ber. 30, 1965 (1897) oxidativer Ringschluss mit Kupfer-II-chlorid in Gegenwart von Ammoniumchlorid. (T. L. Gilchrist et al., Adv. in Heterocyclic Chem. 16, 60 (1974), Reduktion der Nitrogruppe (H. v. Pechmann et al., Chem. Ber. 42, 659 (1909).

Die Herstellung der entsprechenden Benztriazole durch oxidativen bzw. reduktiven Ringschluss der o-Amino- oder Nitroazoverbindung ist beschrieben: US 2 501 188 oder J. Cepcianski u. J. Majer, Collect. Czech. Chem. Commun. 34, 72 (1969).

Die Herstellung der Verbindungen der Beispiele 1 bis 15 erfolgt durch Diazotierung der 2-(4'-Aminophenyl)-1,2,3-triazole mit Nitrosylschwefelsäure in Eisessig/Propionsäure und anschliessender Kupplung auf die entsprechenden Aniline mit freier $NH_2$-Gruppe. Danach wird mit Nitrosylschwefelsäure in Eisessig/Propionsäure nochmals diazotiert und anschliessend bei den Beispielen 1-13 und 17-30 auf die entsprechend substituierten Aniline bzw. bei den Beispielen 14-16 auf m-Kresol gekuppelt. Die Herstellung der Farbstoffe der Beispiele 14-16 erfolgt durch Alkylierung der phenolischen OH-Gruppe mit Butyl- bzw. den entsprechenden Benzybromiden in DMF mit Kaliumcarbonat bei 100°C.

Die Reinigung der Farbstoffe wird durch Chromatographie über Kieselgel mit Toluol/Essigester-Gemischen als Laufmittel durchgeführt. Anschliessend werden die Farbstoffe aus Toluol umkristallisiert. Die Reinheitskontrolle erfolgt durch Dünnschichtchromatographie und Elementaranalyse.

Eine repräsentative Herstellungsmethode ist im folgenden Beispiel beschrieben. Die Angaben über Teile und Prozente beziehen sich, sofern nicht anders vermerkt auf das Gewicht.

Von besonderer Bedeutung sind Verbindungen der Formel Ia

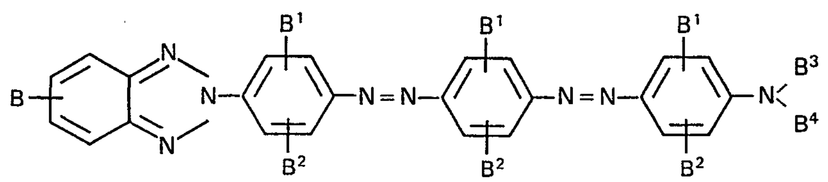

Ia

in der

B Wasserstoff, $C_1$- bis $C_4$-Alkyl, Cyclohexyl, $C_1$- bis $C_9$-Alkoxycarbonyl, Nitro oder Cyan, die Reste

$B^1$ und $B_2$ unabhängig voneinander Wasserstoff oder Methyl und

$B^3$ und $B^4$ unabhängig voneinander Wasserstoff, $C_1$- bis $C_8$-Alkyl, Benzyl oder Cyclohexyl oder zusammen mit dem Stickstoff Pyrrolidino, Piperidino oder Morpholino sind.

*Beispiel*

20 Teile 2-(4'-Aminophenyl)-5-methyl-1,2,3--benztriazol wurden in 100 Teilen Eisessig und 100 Teilen Propionsäure suspendiert und bei 5°C mit 71 Teilen einer ca. 17%igen Nitrosylschwefelsäure diazotiert. Nach zweistündigem Rühren bei 5°C wurde die Diazoniumsalzlösung in 1000 Teile Wasser gegeben, überschüssiges Nitrit durch Zugabe von Amidosulfonsäure vernichtet und die Mischung anschliessend filtriert. Das Filtrat wurde unter Eiskühlung zu einer Lösung von 11 Teilen 2,5-Dimethylanilin, 10 Teilen konz. Salzsäure, 200 Teilen Wasser und 200 Teilen Eis gegeben, der pH des Lösung mit gesättigter, wässriger Natriumacetatlösung auf 1-1,5 eingestellt und anschliessend bei Raumtemperatur über Nacht gerührt. Der entstandene Farbstoff wurde abgesaugt, zunächst mit Wasser, dann mit gesättigter Natrium acetatlösung und dann nochmals mit Wasser gewaschen. Das gut trockengesaugte Nutschgut wurde in 400 Teilen Eisessig angerührt und bei 5°C zuerst mit 30 Teilen einer 23%igen Natriumnitritlösung und dann mit 40 Teilen konz. Salzsäure versetzt. Nach dreistündigem Rühren bei 5°C wurde das überschüssige Nitrit mit Amidosulfonsäure vernichtet, zu der Diazoniumsalzsuspension eine Lösung von 11 Teilen N,N-Dimethylanilin in 10 Teilen konz. Salzsäure, 200 Teilen Wasser und 200 Teilen Eis gegeben und anschliessend bei Raumtemperatur über Nacht gerührt. Der rote Farbstoff wurde abgesaugt, mit Wasser gewaschen und getrocknet.

Ausbeute: 29 Teile.

Die Reinigung des Farbstoffs erfolgte durch Chromatographie über Kieselgel (MN-Kieselgel 60, 0,063-0,2 nm) und einem Toluol/Essigester-Gemisch (10:1) als Laufmittel. Nach der chromatographischen Reinigung wurde der Farbstoff aus Toluol umkristallisiert.

Schmp.: 214°C.

| Bsp. | | Schm. | λ max ($CH_2Cl_2$) |
|---|---|---|---|
| 1 | 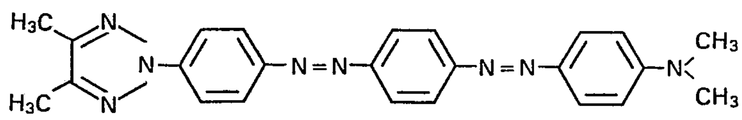 | 270°C | 428 nm |
| 2 | 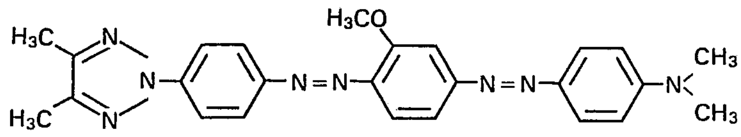 | 230°C | |
| 3 | 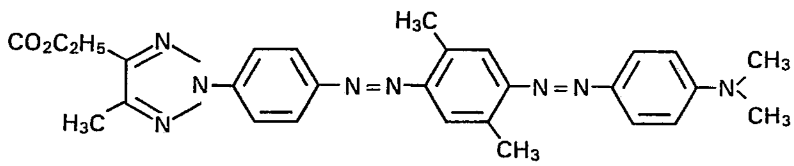 | 234°C | 487 nm |
| 4 | 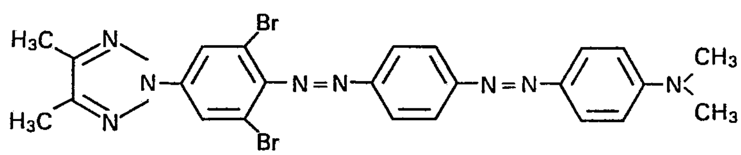 | 150°C | |
| 5 | 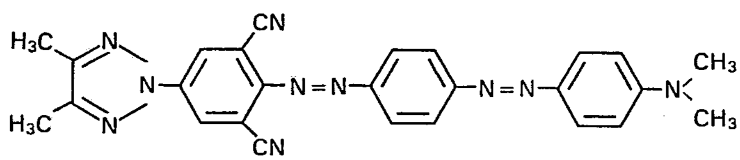 | 160°C | |
| 6 | 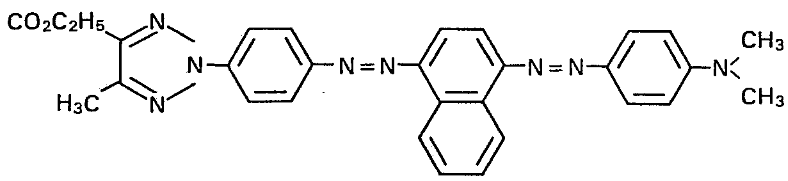 | 230°C | 527 nm |
| 7 | 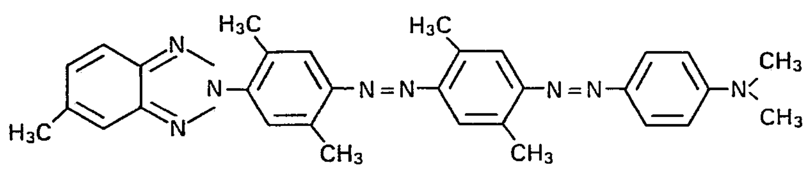 | 230°C | 483 nm |
| 8 | 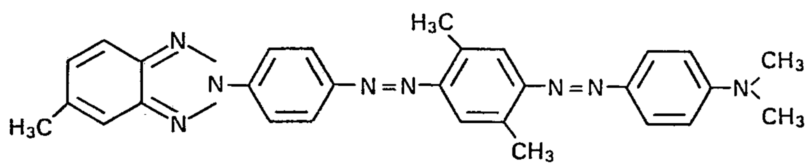 | 241°C | 490 nm |
| 9 | 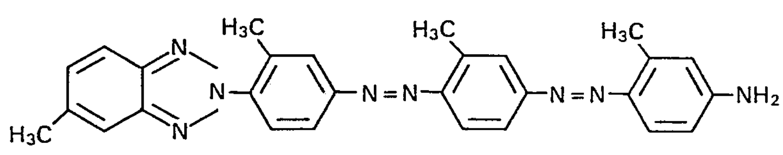 | 194°C | 424 nm |

| Bsp. | | Schm. | λ max ($CH_2Cl_2$) |
|---|---|---|---|
| 10 | 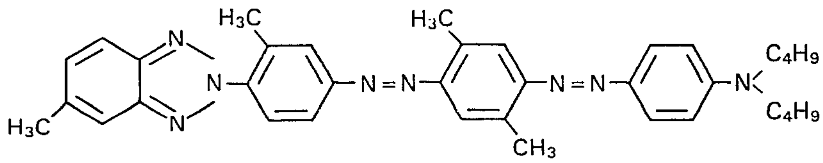 | 123°C | 508 nm |
| 11 | 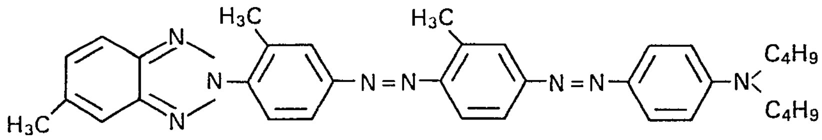 | 122°C | 505 nm |
| 12 | 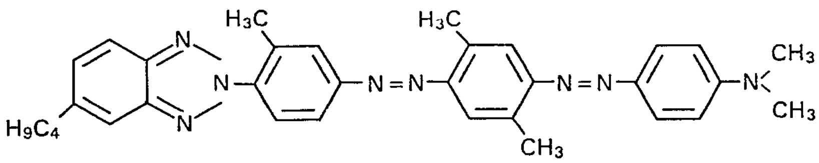 | 170°C | 487 nm |
| 13 | 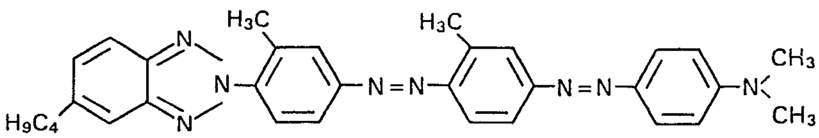 | 156°C | 483 nm |
| 14 | 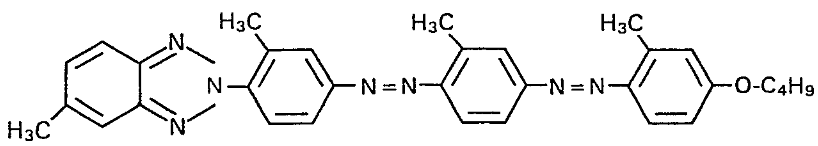 | 163°C | 400 nm |
| 15 | 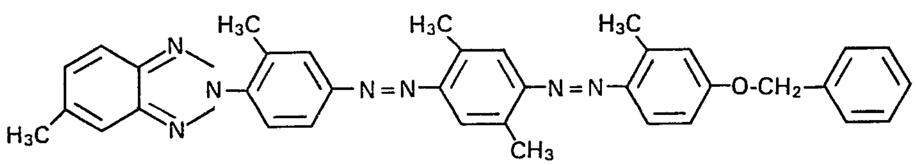 | 183°C | 400nm |
| 16 | 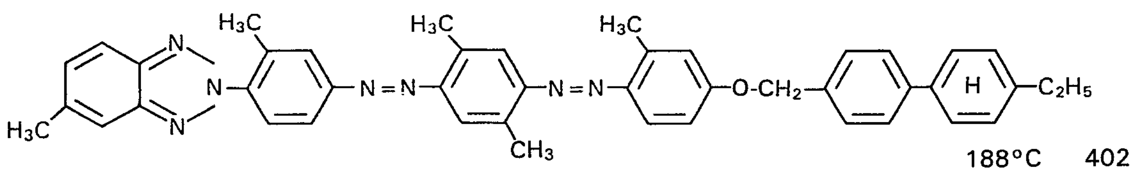 | 188°C | 402 nm |
| 17 | 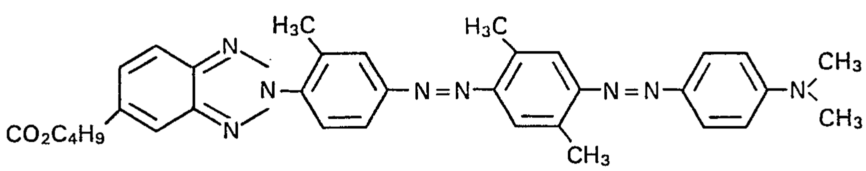 | 202°C | 490 nm |
| 18 | 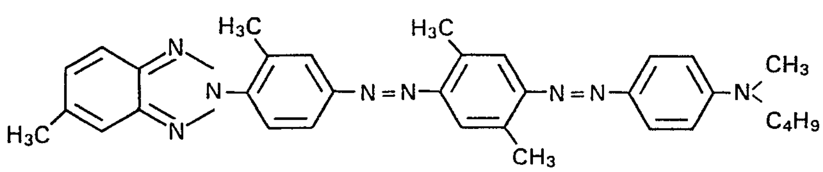 | 158°C | 498 nm |

| Bsp. | | Schm. | γ max ($CH_2Cl_2$) |
|---|---|---|---|
| | 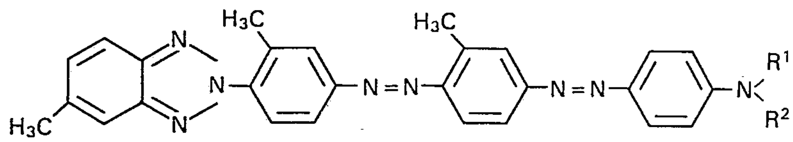 | | |
| 19 | $R^1 = R^2 = CH_3$ | 192°C | 482 nm |
| 20 | $R^1 = H, R^2 = C_4H_9$ | 130°C | 455 nm |
| 21 | $R^1 = H, R^2 = CH_2-$ 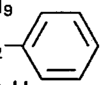 | 181°C | 445 nm |
| 22 | $R^1 = CH_3, R^2 = C_4H_9$ | 149°C | 495 nm |
| 23 | $R^1 = CH_3, R^2 = CH_2-$ 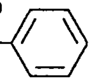 | 156°C | 478 nm |
| 24 | 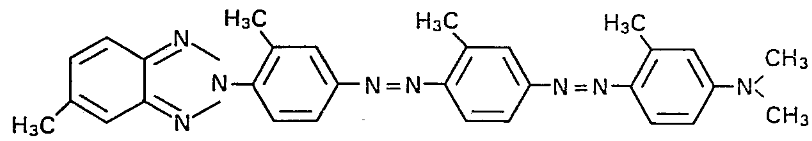 | 203°C | 500 nm |
| 25 | 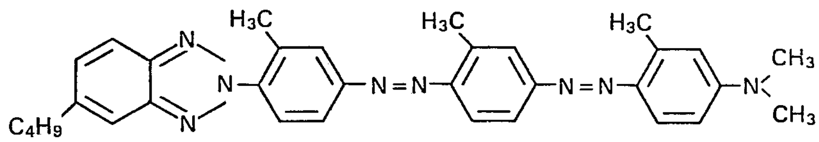 | 140°C | 496 nm |
| 26 | 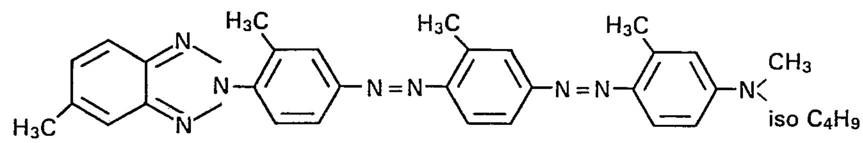 | 148°C | 508 nm |
| 27 | 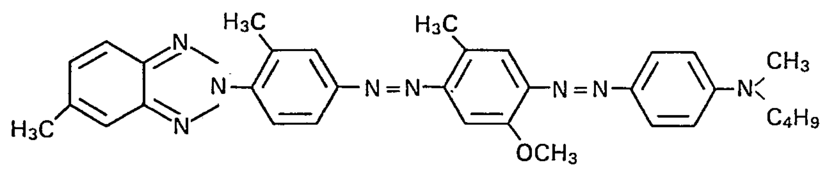 | 166°C | 520 nm |
| 28 | 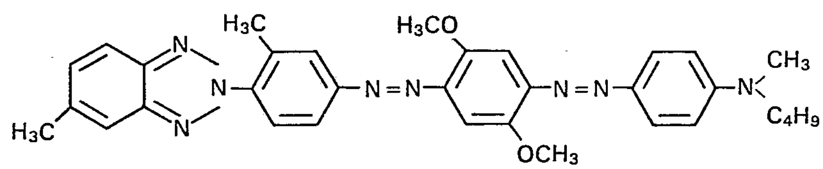 | 169°C | 540 nm |
| 29 | 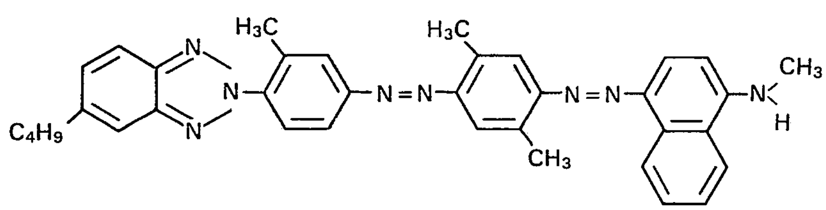 | 162°C | 478 nm |
| 30 | 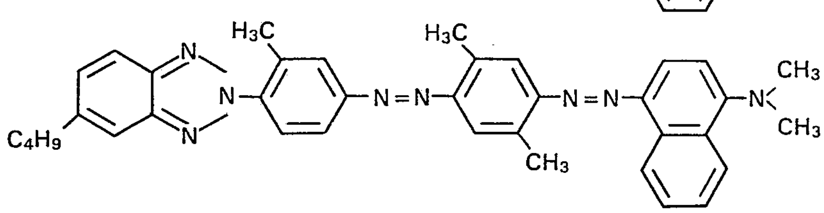 | 216°C | 551 nm |

In *Tabelle 1* sind für die Beispiele 1-16 der in der Breitbereichsmischung ZLI 1840 der Fa. Merck bei Raumtemperatur gemessene Ordnungsgrad S und die ebenfalls in ZLI 1840 bei Raumtemperatur bestimmte Löslichkeit L zusammengefasst. In *Tabelle 3* sind der Ordnungsgrad S und die Löslichkeit L der Beispiele 17-30, gemessen bei Raumtemperatur in der angegebenen Flüssigkristallmischung der Fa. Merck, zusammengefasst.

Der Ordnungsgrad S wurde nach der bekannten Gleichung

$$S = \frac{CR - 1}{CR + 2}$$

in handelsüblichen Messzellen mit homogener Randorientierung bestimmt. Das dichroitische Verhältnis CR wurde durch Messung der Extinktionen $E''$ (Messung mit parallel zur Vorzugsrichtung der nematischen Phase polarisiertem Licht) und $E^{\perp}$ (Messung mit senkrecht zur Vorzugsrichtung der nematischen Phase polarisiertem Licht) nach der Beziehung

$$CR = \frac{E''}{E^{\perp}}$$

ermittelt, wobei die Farbstoffkonzentration so gewählt wurde, dass $E''$ zwischen 1 und 2 lag. Die Messungen wurden an einem Spektralphotometer der Fa. Beckman Acta CIII durchgeführt.

In *Abbildung 1* sind die Extinktionen $E''$ und $E^{\perp}$ für Beispiel 13 in ZLI 1840 dargestellt.

Die Löslichkeit wurde wie folgt bestimmt:

50 mg des jeweiligen Farbstoffs wurden 1 Woche bei Raumtemperatur in 1 ml ZLI 1840 eingerührt, die gesättigte Lösung wurde von Rückstand abzentrifugiert und die Löslichkeit durch Extinktionsvergleich ermittelt.

TABELLE 1

| Beispiel | Ordnungsgrad S | Löslichkeit L |
|---|---|---|
| 1 | 0,74 | 0,4% |
| 2 | 0,70 | 0,7% |
| 3 | 0,73 | 0,2% |
| 4 | 0,61 | 1,8% |
| 5 | 0,74 | <0,1% |
| 6 | 0,74 | 0,5% |
| 7 | 0,76 | 0,5% |
| 8 | 0,73 | 0,6% |
| 9 | 0,75 | 2 % |
| 10 | 0,71 | 5 % |
| 11 | 0,74 | >5 % |
| 12 | 0,76 | >2,3% |
| 13 | 0,79 | 2,8% |
| 14 | 0,74 | 0,5% |
| 15 | 0,74 | 0,6% |
| 16 | 0,77 | 2,9% |

Die Bestimmung der Lichtstabilität erfolgte durch Schnellbelichtung der Messzelle im Suntest (Fa. Hanau), bei 25°C. Gemessen wurde hierbei der Abfall von $E''$. In *Tabelle 2* sind die Anfangsextinktion $E_0''$ und die Belichtungszeit $E''_{80\%}$, nach der $E_0''$ auf 80% gesunken ist, für die Beispiele 3 und 6-13 angegeben. In den *Abbildungen 2, 3 und 4* ist die prozentuale Änderung von $E_0''$ gegen die Belichtungszeit für die Beispiele 6, 9 und 13 dargestellt.

TABELLE 2

| Beispiel | $E_0''$ | $E''_{80\%}$ |
|---|---|---|
| 3 | 1,39 | 101 h |
| 6 | 1,16 | 27,5 h |
| 7 | 1,47 | 111 h |
| 8 | 1,88 | 147 h |
| 9 | 1,63 | 170 h |
| 10 | 1,49 | 98 h |
| 11 | 1,80 | 97 h |
| 12 | 1,57 | 111 h |
| 13 | 1,25 | 68 h |

TABELLE 3

| Beispiel | Ordnungsgrad S | Löslichkeit L | Flüssigkristallmischung |
|---|---|---|---|
| 17 | 0,76 | 0,3% | ZLI 1840 |
| 18 | 0,74 | 2,0% | ZLI 1957/5 |
| 19 | 0,76 | 2,8% | ZLI 1840 |
| 20 | 0,77 | >5 % | ZLI 1840 |
| 21 | 0,79 | 1,9% | ZLI 1840 |
| 22 | 0,77 | >5 % | ZLI 1840 |
| 23 | 0,76 | 1,9% | ZLI 1840 |
| 24 | 0,76 | 2,0% | ZLI 1840 |
| 25 | 0,75 | 3,9% | ZLI 1840 |
| 26 | 0,72 | 1,5% | ZLI 1957/5 |
| 27 | 0,71 | 0,5% | ZLI 1957/5 |
| 28 | 0,67 | 0,3% | ZLI 1975/5 |
| 29 | 0,70 | 2,0% | ZLI 1840 |
| 30 | 0,65 | 0,1% | ZLI 1840 |

**Patentansprüche**

1. Triazolgruppen enthaltende Azofarbstoffe der allgemeinen Formel

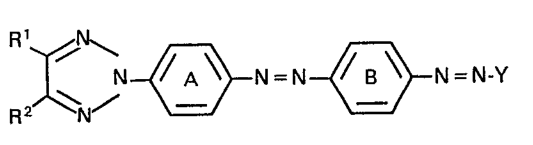

I

in der

$R^1$ und $R^2$ Wasserstoff, gegebenenfalls substituiertes Alkyl, Cycloalkyl, Aralkyl, Aryl, Acyl, Alkoxy- oder Aroxycarbonyl oder zusammen Alkylen oder ein gegebenenfalls substituierter Benzring und

Y ein Rest der Formel

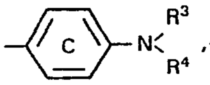 , 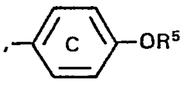 , 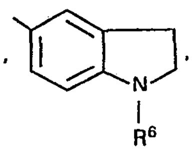 ,

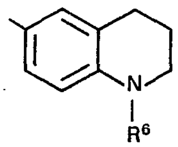 , 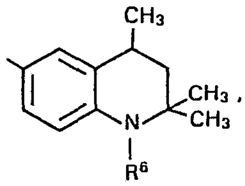 ,

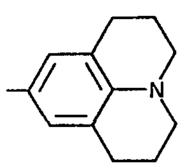 oder 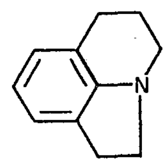

sind, wobei die Ringe A, B und C noch substituiert und durch einen Benzring annelliert sein können und wobei

$R^3$ und $R^4$ Wasserstoff oder gegebenenfalls substituiertes Alkyl, Aralkyl oder Cycloalkyl oder zusammen mit dem Stickstoff Piperidino, Pyrrolidino oder Morpholino,

$R^5$ Wasserstoff, gegebenenfalls substituiertes Alkyl, Cycloalkyl, Aralkyl, Aryl, Acyl, Alkoxy- oder Aroxycarbonyl oder Alkyl- oder Arylsulfonyl und

$R^6$ Wasserstoff, Alkyl oder Cycloalkyl sind.

2. Verbindungen gemäss Anspruch 1 der Formel

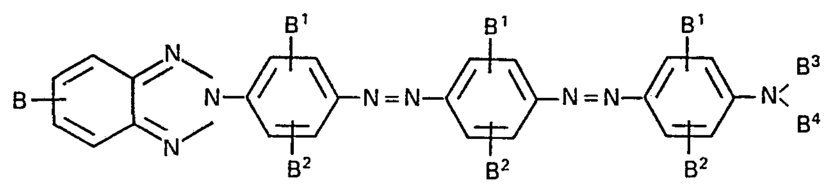 Ia

in der

B Wasserstoff, $C_1$- bis $C_4$-Alkyl, Cyclohexyl, $C_1$- bis $C_9$-Alkoxycarbonyl, Nitro oder Cyan, die Reste

$B^1$ und $B^2$ unabhängig voneinander Wasserstoff oder Methyl und

$B^3$ und $B^4$ unabhängig voneinander Wasserstoff, $C_1$- bis $C_4$- Alkyl, benzyl oder Cyclohexyl oder zusammen mit dem Stickstoff Pyrrolidino, Piperidino oder Morpholino sind.

3. Verwendung der Verbindungen gemäss Anspruch 1 als Farbstoffe in flüssigkristallinen Medien.

**Claims**

1. An azo dye which contains triazolyl groups and is of the formula

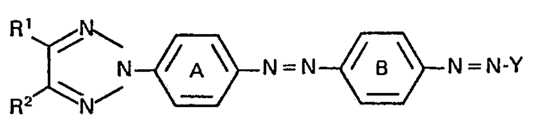 I,

where

$R^1$ and $R^2$ are each hydrogen, unsubstituted or substituted alkyl, cycloalkyl, aralkyl, aryl, acyl, alkoxycarbonyl or aryloxycarbonyl, or together form alkylene or an unsubstituted or substituted benzo ring, and

Y is a radical of the formula

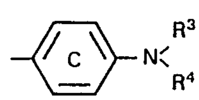 , 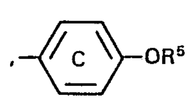 , 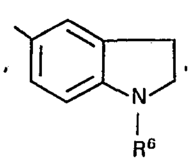 ,

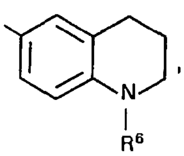 , 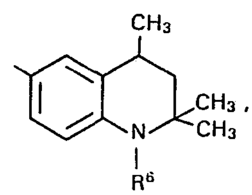 ,

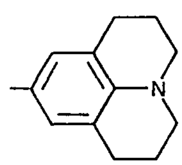 or 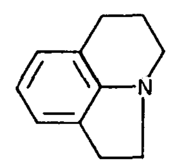

in which formulae the rings A, B and C can be further substituted or benzo-fused, and

$R^3$ and $R^4$ are each hydrogen or unsubstituted or substituted alkyl, aralkyl or cycloalkyl, or, together with the nitrogen, form piperidino, pyrrolidino or morpholino,

$R^5$ is hydrogen, unsubstituted or substituted alkyl, cycloalkyl, aralkyl, aryl, acyl, alkoxycarbonyl, aryloxycarbonyl, alkylsulfonyl or arylsulfonyl, and

$R^6$ is hydrogen, alkyl or cycloalkyl.

2. A compound as claimed in claim 1, of the formula

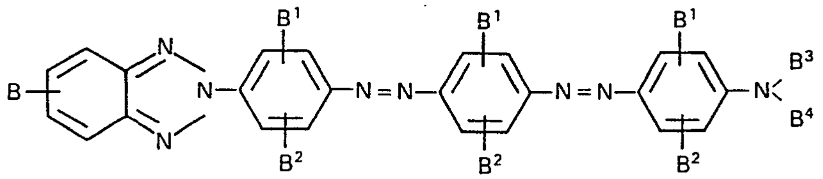

Ia,

where

B is hydrogen, $C_1$-$C_4$-alkyl, cyclohexyl, $C_1$-$C_9$--alkoxycarbonyl, nitro or cyano,

$B^1$ and $B^2$ independently of one another are hydrogen or methyl, and

$B^3$ and $B^4$ independently of one another are hydrogen, $C_1$-$C_4$-alkyl, benzyl or cyclohexyl, or, together with the nitrogen, form pyrrolidino, piperidino or morpholino.

3. The use of a compound as claimed in claim 1 as dye in liquid crystalline media.

**Revendications**

1. Colorants azoïques contenant des groupes triazole, de formule générale

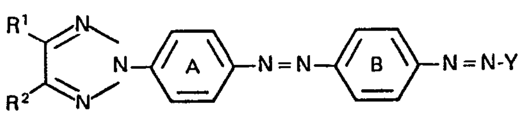

I

dans laquelle

$R^1$ et $R^2$ représentent chacun un atome d'hydrogène, un radical alkyle éventuellement substitué, cycloalkyle, aralkyle, aryle, acyle, alcoxy- ou aryloxycarbonyle ou, ensemble, un radical alkylène ou un noyau benzénique éventuellement substitué et

Y est un radical de formule

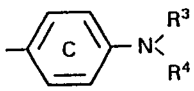
,
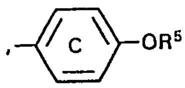
,
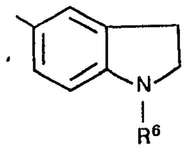
,

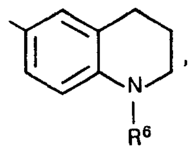
,
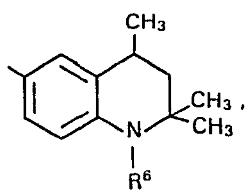
,

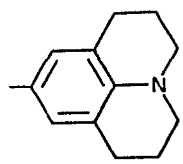
ou
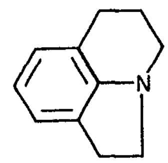

les noyaux A, B et C pouvant être encore substitués et condensés avec un noyau benzénique et

$R^3$ et $R^4$ représentant chacun un atome d'hydrogène, un radical alkyle eventuellement substitué, aralkyle ou cycloalkyle ou formant, avec l'atome, d'azote, un radical piperidino, pyrrolidino ou morpholino,

$R^5$ représente un atome d'hydrogène, un radical alkyle eventuellement substitué, cycloalkyle, aralkyle, aryle, acyle, alcoxy- ou aryloxycarbonyle, alkyl- ou arylsulfonyle et

$R^6$ représente un atome d'hydrogène ou un radicale alkyle ou cycloalkyle.

2. Composés selon la revendication 1 de formule

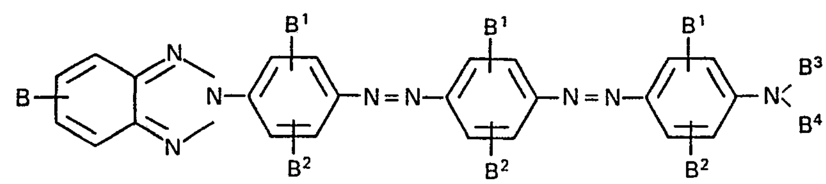

Ia

dans laquelle

B représente un atome d'hydrogène, un radical alkyle en $C_1$ à $C_4$, cyclohexyle, $C_1$-$C_9$-alcoxycarbonyle, nitro ou cyano,

$B^1$ et $B^2$ représentent, indépendamment l'un de l'autre, des atomes d'hydrogène ou des radicaux méthyle et

$B^3$ et $B^4$ représentent, indépendamment l'un de l'autre, des atomes d'hydrogène, des radicaux akyle en $C_1$ à $C_4$, benzyle ou cyclohexyle ou forment, avec l'atome d'azote, un radical pyrrolidino, piperidino ou morpholino.

3. Utilisation des composés selon la revendication 1 comme colorants dans des milieux de cristaux liquides.

Abbildung 1

Dichroitisches Verhältnis von Beispiel 13

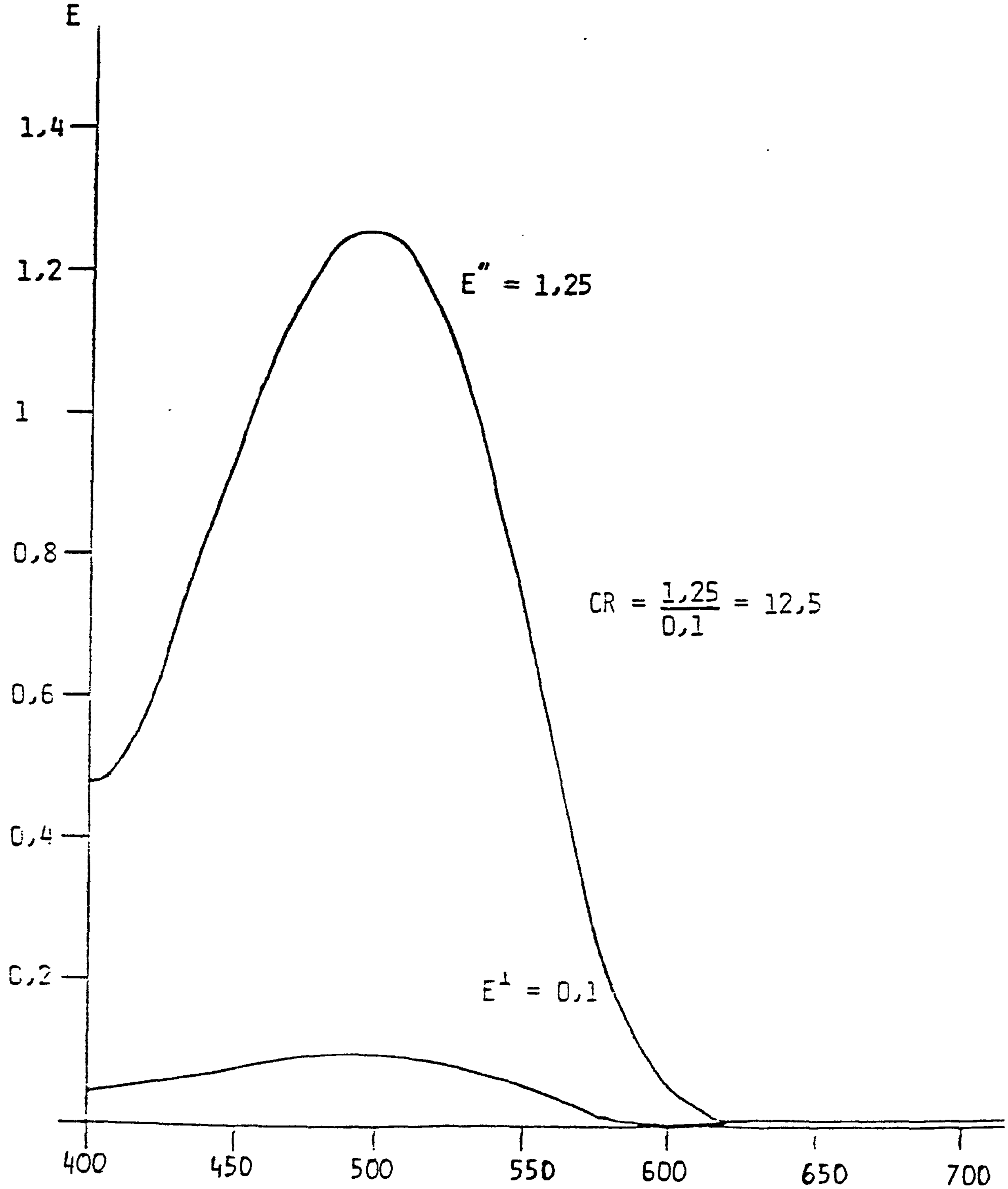

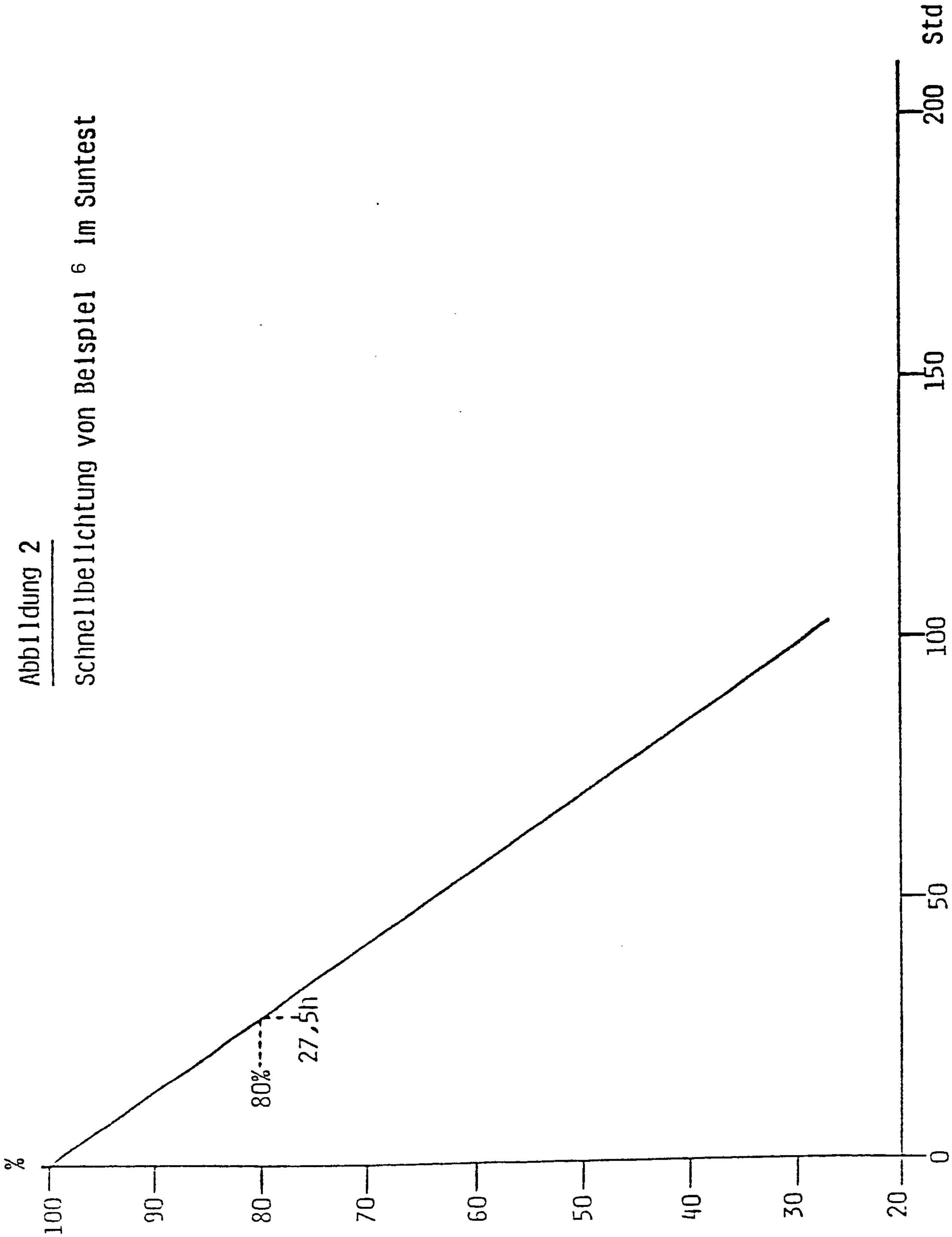


Abbildung 2

Schnellbelichtung von Beispiel 6 im Suntest

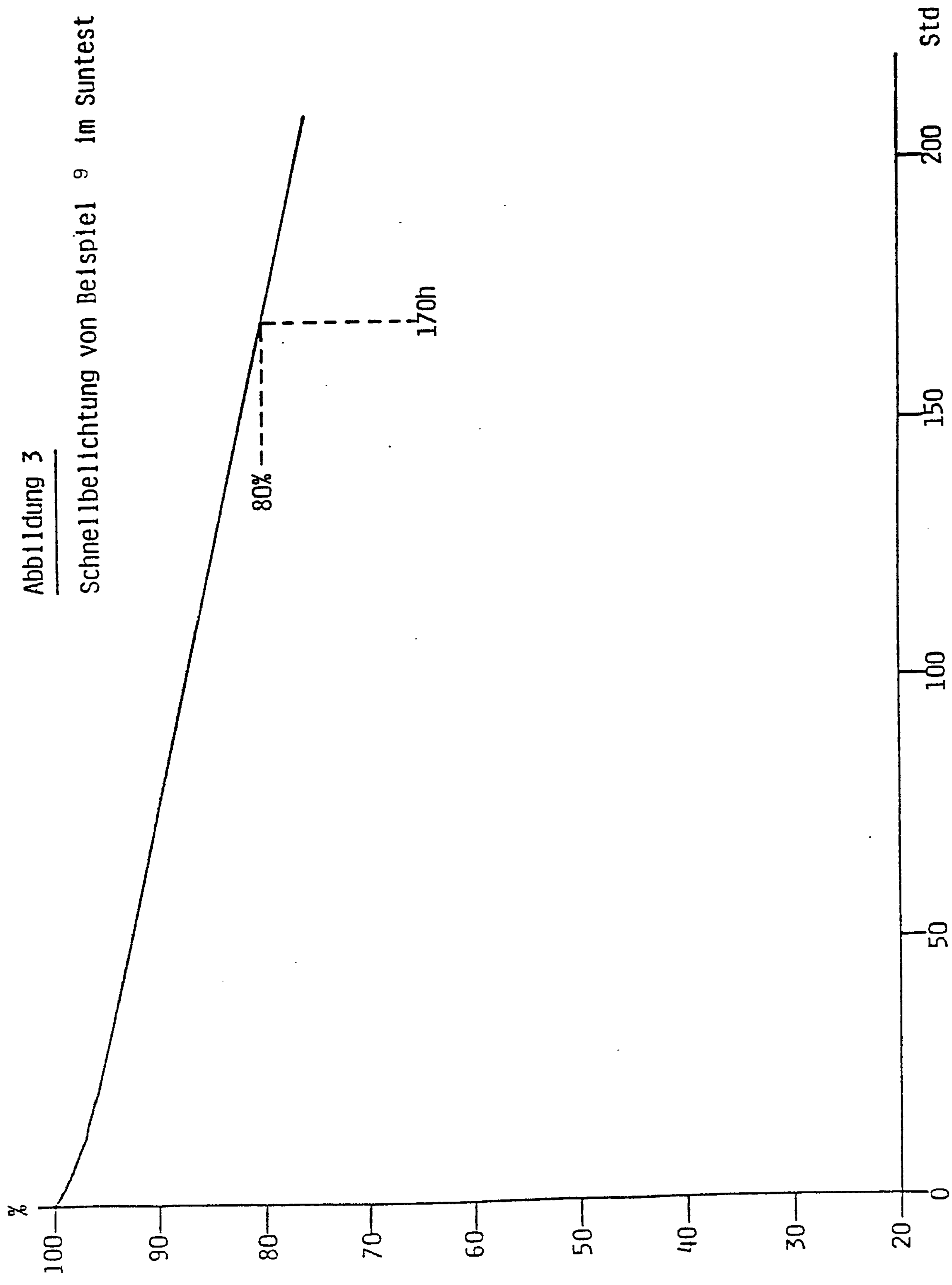


Abbildung 3

Schnellbelichtung von Beispiel 9 im Suntest

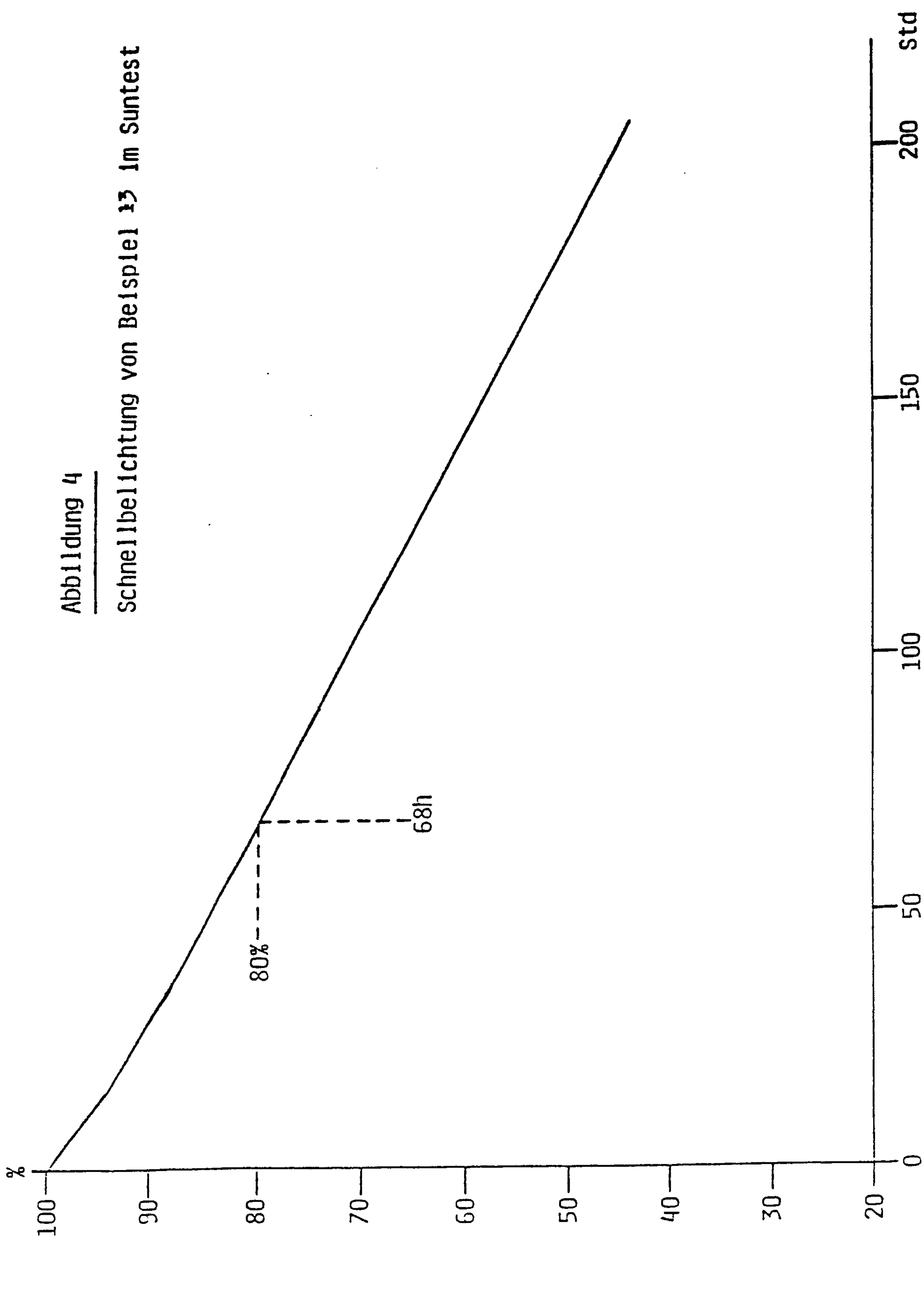


Abbildung 4

Schnellbelichtung von Beispiel 13 im Suntest